# EUROPÄISCHE PATENTANMELDUNG

(11) **EP 4 071 374 A1**
(43) Veröffentlichungstag der Anmeldung: **12.10.2022**
(21) Anmeldenummer: 22158750.4
(22) Anmeldetag: 25.02.2022
(51) Int. Cl.: F16D 1/068, F16D 3/76

(54) **VORRICHTUNG ZUR ÜBERTRAGUNG VON DREHMOMENTEN**

(30) Priorität: 09.04.2021 DE 102021108935
(71) Anmelder: KTR Systems GmbH, 48432 Rheine (DE)
(72) Erfinder: Dr. Partmann, Norbert, 48527 Nordhorn (DE); Exner, Jochen, 53773 Hennef (DE); Kricke, Martin, 42781 Haan (DE)
(74) Vertreter: Roche, von Westernhagen & Ehresmann

(57) **Zusammenfassung**

Die Erfindung betrifft unter anderem eine Vorrichtung (10) zur Übertragung von Drehmomenten von einem Antrieb (11) zu einem Abtrieb (12), umfassend einen radial außen angeordneten, ringförmigen Flansch (13), eine radial innenliegende ringförmige Nabe (14) und einen radial zwischen Nabe (14) und Flansch (13) angeordneten ringförmigen Elastomerkörper (15), wobei der Elastomerkörper (15) an eine Innenumfangsfläche (16) des Flansches (13) anvulkanisiert ist und an eine Außenumfangsfläche (18) der Nabe (14)anvulkanisiert ist, und wobei die Nabe (14) auf ihrer Innenumfangsfläche (18) eine Innenverzahnung (19) bereitstellt.

## Beschreibung

Die Erfindung betrifft zunächst eine Vorrichtung zur Übertragung von Drehmomenten von einem Antrieb zu einem Abtrieb nach Anspruch 1.

Derartige Vorrichtungen werden gemeinhin auch als Kupplungen bezeichnet. Sie dienen zur Übertragung von Drehmomenten von einem Antrieb, z. B. von einem Schwungrad eines Motors, zu einem Abtrieb, z. B. zu einer Abtriebswelle.

Bekannt sind aus dem Stand der Technik Vorrichtungen unterschiedlicher Bauart, bei der beispielsweise ein Kraftfluss durch den Elastomerkörper in Axialrichtung hindurch verläuft sowie Vorrichtungen einer anderen Gattung oder Bauart, bei denen ein Kraftfluss durch den Elastomerkörper in Radialrichtung verläuft. Die vorliegende Erfindung bezieht sich ausschließlich auf Vorrichtungen mit einem in Radialrichtung verlaufenden Kraftfluss durch den Elastomerkörper hindurch.

Vorrichtungen der eingangs beschriebenen Art werden von der Anmelderin seit Jahrzehnten entwickelt und gefertigt. Die Vorrichtungen dienen vielfältigen Anwendungszwecken.

Es sind druckschriftlich nicht belegbare Vorrichtungen des Standes der Technik bekannt, die von der Anmelderin in Verkehr gebracht worden sind, bei denen der Elastomerkörper entweder an den Flansch oder an die Nabe anvulkanisiert ist. An dem jeweils anderen radialen Endbereich des Elastomerköpers, an dem eine Anvulkanisation nicht erfolgt, weist der Elastomerkörper eine unmittelbar von dem Elastomerkörper gebildete Verzahnung auf, um eine axiale Steckbarkeit zu gewährleisten.

Im Stand der Technik sind weitere druckschriftlich nicht belegbare Vorrichtungen der Anmelderin bekannt, bei denen eine Anvulkanisation des Elastomerkörpers an den Flansch und an die Nabe erfolgt, wobei die Nabe Anschraubpunkte oder Befestigungsflächen zur Befestigung einer Welle umfasst.

Hiervon ausgehend liegt der Erfindung die Aufgabe zugrunde, eine Vorrichtung anzugeben, die bei optimierter Gestaltung des Elastomerkörpers eine minimierte axiale Bauhöhe aufweist.

Die Erfindung löst diese Aufgabe mit den Merkmalen des Anspruches 1.

Das Prinzip der Erfindung besteht im Wesentlichen darin, die Vorrichtung mit einem Elastomerkörper auszustatten, der sowohl radial außenseitig an den Flansch anvulkanisiert ist als auch radial innenseitig an die Außenumfangsfläche der Nabe anvulkanisiert ist. Die Nabe selbst ist von einem ringförmigen Körper gebildet, der auf seiner Innenumfangsfläche eine Verzahnung aufweist. Die Verzahnung dient insbesondere einer unmittelbaren Kooperation mit einer Außenverzahnung einer abtriebsseitgen Welle.

Die Verzahnung ist unmittelbar an der Nabe angeordnet, befindet sich somit in derselben Radialebene, wie der Elastomerkörper. Hierdurch kann eine axial extrem kurzbauende Vorrichtung bereitgestellt werden.

Die erfindungsgemäße Vorrichtung stellt in der Radialebene des Elastomerkörpers eine hoch belastbare steckbare Verbindung bereit.

Damit wird z. B. die Möglichkeit bereitgestellt, eine Welle, an der unmittelbar eine Außenverzahnung angebracht ist, unmittelbar in die Nabe hinein einzustecken. Alternativ kann die Innenverzahnung der Nabe auch dazu verwendet werden, ein Zwischenelement, z. B. eine wellenseitige Nabe, aufzunehmen, um z. B. eine Pressverbindung oder eine Passfederverbindung oder eine Klemmnabenverbindung mit einer Abtriebswelle einzugehen.

Die erfindungsgemäße Vorrichtung bietet also in der Radialebene des Elastomerkörpers eine definierte mechanische Schnittstelle in Form einer hoch belastbaren Verzahnung.

Dabei ermöglicht die erfindungsgemäße Vorrichtung eine Verwendung von Bauteilen, die mit Anschlusselementen, insbesondere herkömmlichen Varianten von Anschlussnaben, oder anderen Anschlusselementen, kompatibel ausstaltbar sind.

Zugleich kann aufgrund der Anvulkansiation des Elastomerelementes sowohl flanschseitig, als auch nabenseitig, auf herkömmliche Bauteile und Erfahrungswerte zurückgegriffen werden.

Erfindungsgemäß wird eine Vorrichtung mit einem Nabenkörper bereitgestellt, der einstückig ausgebildet ist und eine Außenumfangsfläche umfasst, die eine Anvulkanisationsfläche für den Elastomerkörper bereitstellt, und der an seiner Innenumfangsfläche eine Verzahnung aufweist. Dies erlaubt eine besonders einfache Herstellung der Nabe mit den geschilderten Funktionalitäten.

Zudem wird gegenüber dem Stand der Technik, der in Axialrichtung vorgeschaltete Anbauteile vorsah, ein erheblicher Bauraumgewinn erreicht. Die Vorrichtung ist demgegenüber axial deutlich kürzer ausgebildet.

Die Vorrichtung bildet eine Scheibenkupplung aus. Hierdurch wird eine Vorrichtung bereitgestellt, die konstruktiv an eine herkömmliche Vorrichtung angenähert ist. Insbesondere kann die erfindungsgemäße Scheibenkupplung drehweich ausgebildet werden.

Der Elastomerkörper besteht aus einer an sich bekannten, herkömmlichen, gummielastischen Masse.

Er dient der Schwingungsdämpfung. Er kann beispielsweise Lastspitzen abtriebsseitig vermeiden, bzw. dämpfen. Zugleich kann unter Zuhilfenahme des Elastomerkörpers auch ein radialer Versatz und/oder ein Axialversatz zwischen Antrieb und Abtrieb um wenige Millimeter und/oder ein Winkelversatz zwischen Antrieb und Abtrieb um wenige Grad ausgeglichen werden.

Dies ermöglicht einen Ausgleich von Fertigungs- aber auch von Montagetoleranzen.

Die Vorrichtung der erfindungsgemäßen Art umfasst einen radial außen angeordneten, ringförmigen, metallischen Flansch, eine radial innenliegende Nabe und einen radial zwischen Nabe und Flansch angeordneten Elastomerkörper. Derartige Vorrichtungen weisen eine in Axialrichtung kurz gehaltene Bauweise auf, mit einem im Wesentlichen in Radialrichtung verlaufenden Kraftfluss, so dass sie insgesamt scheibenartig oder scheibenförmig ausgebildet sind. Von daher bezeichnet man derartige Vorrichtungen auch als Scheibenkupplungen.

Die erfindungsgemäße Vorrichtung weist eine geringe Drehelastizität auf, so dass sie auch als drehweiche Kupplung bezeichnet werden kann.

Bei den eingangs beschriebenen Kupplungen der Anmelderin nach dem Stand der Technik wird der metallische Flansch insbesondere von einem Gussteil aus Aluminium bereitgestellt. Bei der erfindungsgemäßen Vorrichtung kann der insbesondere metallische Flansch hingegen z. B. von einem metallischen Blech bereitgestellt sein oder ein Blech umfassen.

Der Flansch kann bei einer Ausführungsform aus einem einzigen Teil, z. B. einem Stahlblech, bestehen. Dieses kann zu einem Ring gebogen und an einer Umfangsstelle können die beiden Enden miteinander verbunden sein. Die Verbindung kann als Fügeverbindung ausgestattet sein, und insbesondere durch ein Verschweißen der freien Enden des Stahlbleches miteinander, erreicht werden. Bei dieser Ausführungsform wird ein einziges, flach liegendes Stahlblech, ein schmaler Stahlblechstreichen oder ein Stahlblechband, zu einem ringförmigen Körper gebogen und anschließend werden die beiden Enden miteinander verbunden. Alternativ kann das Stahlblech auch aus mehreren Abschnitten bestehen, so dass entlang des Umfangs zwei oder noch mehr Fügungsstellen, insbesondere Schweißnähte oder Schweißbereiche, vorgesehen sind.

Das Stahlblech kann mit einem Kragen des Flansches verschweißt sein, der entlang einer Radialebene ausgerichtet ist. Der Kragen wird z. B. von einem gesonderten Bauelement bereitgestellt. Insbesondere kann der Kragen aus einem flachliegenden Blech mittels Laser ausgeschnitten sein.

Bei Betrachtung eines Querschnitts durch den so gebildeten Flansch entlang der Längsachse der Vorrichtung weist der metallische Ringflansch insbesondere einen im Wesentlichen L-förmigen Querschnitt auf.

Der Kragen kann Befestigungsbohrungen für den Durchtritt von Befestigungsmitteln aufweisen, mit denen der Flansch relativ zu dem Antrieb festgelegt wird, z. B. an dem Schwungrad eines Motors festgeschraubt wird.

Insbesondere ist der Flansch der erfindungsgemäßen Vorrichtung nicht mehr vorzugsweise von einem Aluminiumgusskörper gebildet, sondern umfasst ein sich in Axialrichtung erstreckendes Blech und einen mit dem Blech verbundenen, sich in Radialrichtung erstreckenden Kragen.

Gemäß einer Variante der Erfindung werden Stahlblech und Kragen von zwei gesonderten Elementen bereitgestellt, die miteinander verbunden werden können.

Von der Erfindung ist aber auch umfasst, wenn der Flansch aus einem Stahlblech aus einem Stück hergestellt ist und der Kragen und das Stahlblech durch Umformung, z. B. durch einen Tiefziehvorgang, oder durch einen Drück- oder Rolliervorgang, gebildet wird.

Das Blech kann kaltgeprägt und mit einer glatten Oberfläche ausgestattet sein. Die Innenumfangsfläche des Flansches, die die mit der Außenumfangsfläche des Elastomerkörpers in Kontakt zu bringende Oberfläche darstellt, kann also ausgesprochen glatt und formstabil gehalten sein. Gegenüber der Vorrichtung des Standes der Technik kann dadurch die Laufgüte erheblich verbessert werden.

Gusstoleranzen, die beim Gießen des metallischen Flansches bei der Vorrichtung des Standes der Technik auftraten, sowie Ungänzen im Material, die die Wuchtgüte nachteilig beeinflussen, können erfindungsgemäß reduziert werden.

Auch ist beim Gießen des Flansches der Vorrichtung des Standes der Technik eine Anordnung von Ausformschrägen erforderlich gewesen. Auf derartige Ausformschrägen kann bei der erfindungsgemäßen Vorrichtung vollständig verzichtet werden.

Schließlich werden auch kürzere, axiale Baulängen bei der erfindungsgemäßen Vorrichtung möglich, so dass Bauraum gewonnen werden kann.

Erfindungsgemäß wird somit eine hohe Präzision in der Bauteilauslegung und eine hohe Wuchtgüte möglich.

Als Blech im Sinne der vorliegenden Erfindung wird insbesondere jedes metallische, zu einem Blech geformte Element angesehen, welches insbesondere aus Stahl oder aus einem anderen geeigneten, metallischen, stahlartigen Material besteht. Als Blech im Sinne der Erfindung kommen insbesondere auch Materialien in Betracht, die unter der Bezeichnung Organoblech bekannt sind.

Von der Erfindung sind auch Vorrichtungen umfasst, bei denen der ringförmige Flansch aus Kunststoff besteht, z. B. von einem Kunststoffspritzgussteil bereitgestellt ist.

Gemäß einer vorteilhaften Ausgestaltung der Erfindung ist die Innenumfangsfläche des Flansches kreiszylindrisch ausgebildet. Dies ermöglicht eine besonders einfache Konstruktion der erfindungsgemäßen Vorrichtung und eine optimierte Anvulkanisation des Elastomerkörpers an den Flansch.

Gemäß einer weiteren vorteilhaften Ausgestaltung der Erfindung ist die Außenumfangsfläche der Nabe kreiszylindrisch ausgebildet oder weist, bei Betrachtung eines Längsschnittes durch die Nabe, eine geringfügige konvexe Krümmung auf. Diese Ausgestaltung der Erfindung ermöglicht eine besonders vorteilhafte Konstruktion der Vorrichtung, sowie eine optimierte Anvulkanisation des Elastomerkörpers an die Nabe.

Gemäß einer weiteren vorteilhaften Ausgestaltung der Erfindung ist die Vorrichtung scheibenförmig ausgebildet. Dies ermöglicht eine axial kurze Bauform und eine Bereitstellung einer erfindungsgemäßen Vorrichtung, die hinsichtlich ihrer Bauform an herkömmliche Vorrichtungen stark angenähert sein kann.

Gemäß einer weiteren vorteilhaften Ausgestaltung der Erfindung entspricht die axiale Bauhöhe der Vorrichtung der axialen Erstreckung der Nabe. Dies ermöglicht eine Bereitstellung einer Vorrichtung mit einer insgesamt nur sehr geringen axialen Bauhöhe. Hierdurch kann erweiterter Bauraum gewonnen werden.

Gemäß einer weiteren vorteilhaften Ausgestaltung der Erfindung weist der Flansch eine geringere axiale Erstreckung auf, als die Nabe. Dies ermöglicht die Bereitstellung einer Vorrichtung mit einer insgesamt nur sehr geringen axialen Bauhöhe. Hierdurch kann bei Montage der Vorrichtung zusätzlicher Bauraum gewonnen werden.

Gemäß einer weiteren vorteilhaften Ausgestaltung der Erfindung weisen die Zähne der Innenverzahnung eine axiale Erstreckung auf, die die axiale Erstreckung der Nabe erreicht oder nahezu erreicht. Dies ermöglicht eine Bereitstellung einer axialen Steckbarkeit, sowie die Möglichkeit, einen axialen Versatz auf einfache Weise auszugleichen, ohne die drehschlüssige Verbindung zwischen Nabe und Welle zu beeinträchtigen.

Gemäß einer weiteren vorteilhaften Ausgestaltung der Erfindung springt die Außenumfangsfläche der Nabe an ihren axialen Randbereichen radial nach innen zurück. Dies ermöglicht die Anordnung von übergreifenden Bereichen des Elastomerkörpers, der diese axialen Randbereiche der Außenumfangsfläche der Nabe übergreift. Hierdurch kann die Anvulkanisation des Elastomerkörpers an die Nabe optimiert werden.

Gemäß einer weiteren vorteilhaften Ausgestaltung der Erfindung übergreift der Elastomerkörper die Randbereiche. Hierdurch kann eine besonders sichere und langlebige, und auch prozesssichere Anvulkanisation des Elastomerkörpers an der Nabe erreicht werden.

Gemäß einer weiteren vorteilhaften Ausgestaltung der Erfindung umfasst der Elastomerkörper einen Radialinnenbereich, einen Radialmittenbereich und einen Radialaußenbereich, wobei sich der Querschnitt des Elastomerkörpers von dem Radialinnenbereich hin zu dem Radialmittenbereich verjüngt und wobei sich der Querschnitt des Elastomerkörpers von dem Radialmittenbereich hin zu dem Radialaußenbereich erweitert.

Gemäß einer weiteren vorteilhaften Ausgestaltung der Erfindung besteht die Nabe aus Kunststoff, insbesondere aus Polyamid, weiter insbesondere aus glasfaserverstärktem Polyamid. Dies ermöglicht beispielsweise die Bereitstellung der Nabe als ein Kunststoffspritzgussteil. Hierdurch kann die Nabe mit präzisen Abmessungen und nur sehr geringen Fertigungstoleranzen bei gleichzeitig hoher Festigkeit und Lebensdauerfähigkeit gefertigt werden.

Gemäß einer alternativen vorteilhaften Ausgestaltung der Erfindung besteht die Nabe aus Metall. Diese alternative Ausführungsform ermöglicht einen Rückgriff auf herkömmliche Fertigungsverfahren und Materialien.

Gemäß einer weiteren vorteilhaften Ausgestaltung der Erfindung ist in die Nabe eine Welle mit einer Außenverzahnung eingesteckt oder einsteckbar, die mit der Innenverzahnung kooperiert. Dies ermöglicht eine besonders einfache Montage der erfindungsgemäßen Vorrichtung.

Gemäß einer weiteren vorteilhaften Ausgestaltung der Erfindung besteht der Flansch aus Metall, insbesondere aus einem Metallblech, weiter insbesondere aus einem Stahlblech. Dies ermöglicht eine besonders preiswerte Fertigung des Flansches und eine Optimierung des Kontaktflächenpaares zwischen Flansch und Elastomer, wodurch eine optimierte Anvulkanisation erreichbar ist.

Außerdem kann durch diese Ausführungsform eine Vorrichtung mit einer sehr hohen Wuchtgüte erreicht werden.

Gemäß einer weiteren vorteilhaften Ausgestaltung der Erfindung weist der Flansch einen L-förmigen oder im Wesentlichen L-förmigen Querschnitt auf. Dies ermöglicht die Fertigung des Flansches aus einem einzigen, tiefgezogenen Bauteil.

Gemäß einer weiteren vorteilhaften Ausgestaltung der Erfindung ist der Flansch von einem einstückigen, durch Umformung gebildeten, insbesondere tiefgezogenen, Bauteil bereitgestellt. Dies ermöglicht eine besonders einfache und prozesssichere Fertigung.

Gemäß einer weiteren vorteilhaften Ausgestaltung der Erfindung ist der Flansch aus zwei gesonderten, durch Fügung miteinander verbundenen Bauteilen bereitgestellt. Dies ermöglicht gleichermaßen eine preiswerte Fertigung.

Gemäß einer weiteren vorteilhaften Ausgestaltung der Erfindung umfasst der Flansch Befestigungsbohrungen. Dies ermöglicht eine einfache Befestigung der Vorrichtung an einem Antrieb, z. B. an einem Schwungrad eines Motors, unter Zuhilfenahme von Schrauben.

Die Erfindung bezieht sich gemäß einem weiteren Aspekt auf ein Verfahren nach Anspruch 15.

Der Erfindung liegt die Aufgabe zugrunde, ausgehend von der eingangs geschilderten Vorrichtung, ein Verfahren anzugeben, mit dem eine Kupplung mit verbesserten Eigenschaften auf einfache Weise herstellbar ist.

Die Erfindung löst diese Aufgabe mit den Merkmalen des Anspruches 15.

Zur Vermeidung von Wiederholungen wird zur Erläuterung der Vorteile des Verfahrens nach Anspruch 15 vollumfänglich auf die vorherigen Ausführungen verwiesen. Diese gelten analog für die Erfindung nach Anspruch 15.

Das Prinzip der Erfindung nach Anspruch 15 besteht darin, dass zunächst ein ringförmiger Flansch und eine ringförmige Nabe bereitgestellt werden. Diese beiden Elemente werden in eine Form, eine sogenannte Werkzeugform eingelegt. Es kann sich dabei insbesondere um eine Gießform oder Vulkanisationsform handeln, ggf. auch um eine Spritzform. Die Form ist bis auf eine Öffnung oder bis auf mehrere Öffnungen, durch die hindurch eine flüssige aushärtbare, gummielastische Masse in die Form eingebracht werden kann, geschlossen.

Gemäß dem erfindungsgemäßen Verfahren wird die flüssige aushärtbare gummielastische Masse, die ggf. erhitzt ist, in die Form eingebracht, z. B. eingespritzt oder eingegossen. Sodann wird erfindungsgemäß die Masse aushärten gelassen, bis ein formstabiler Elastomerkörper gebildet ist.

Im Zuge des Aushärtenlassens, des sogenannten Vulkanisationsprozesses, wird eine Anvulkanisation des Elastomerkörpers an einer Innenumfangsfläche des Flansches und zugleich an einer Außenumfangsfläche der Nabe durch Haftung bewirkt. Nabe und Flansch werden also im Zuge des Vulkanisationsprozesses der gummielastischen Masse unmittelbar miteinander fest verbunden.

Die Nabe wird von einem Kunststoffteil, insbesondere von einem Kunststoffspritzgussteil, bereitgestellt. Diese weist bereits beim Einlegen in die Form eine Innenverzahnung auf. Das erfindungsgemäße Verfahren erlaubt insoweit eine besonders einfache Fertigung der erfindungsgemäßen Vorrichtung.

Weitere Vorteile der Erfindung ergeben sich aus den nicht zitierten Unteransprüchen sowie anhand der nachfolgenden Beschreibung der in den Zeichnungen dargestellten Ausführungsbeispiele. Darin zeigen:
- Fig. 1: in einer teilgeschnittenen, schematischen Ansicht einen Längsschnitt durch ein Ausführungsbeispiel einer erfindungsgemäßen Vorrichtung, sowie beabstandet davon in einer abgebrochenen Darstellung einen Teil einer in die Nabe der Vorrichtung einsteckbaren Welle mit Außenverzahnung,
- Fig.2: in einer schematischen, perspektivischen Ansichtsdarstellung, etwa gemäß Ansichtspfeil II in Fig. 1, die Vorrichtung der Fig. 1 mit schematisch angedeuteter, abgebrochener Welle mit Außenverzahnung, wobei der Übersichtlichkeit halber von Außenverzahnung der Welle nur vier Zähne dargestellt sind,
- Fig. 3: in einer schematischen Seitenansicht die Vorrichtung in Fig. 1, etwa gemäß Ansichtspfeil III in Fig. 1 in Einzeldarstellung, ohne die Welle, und
- Fig. 4: die Vorrichtung der Fig. 2 in einer schematischen, teilgeschnittenen, perspektivischen Darstellung unter einer geänderten Blickrichtung, etwa gemäß Ansichtspfeil IV in Fig. 2, wobei die bzgl. Fig. 3 rechte Hälfte der Vorrichtung aus Gründen der Übersicht nicht dargestellt ist, wobei die Welle in die Nabe eingesteckt ist, und wobei die Welle gegenüber der Welle der Figuren 1 und 2 geändert ausgebildet ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

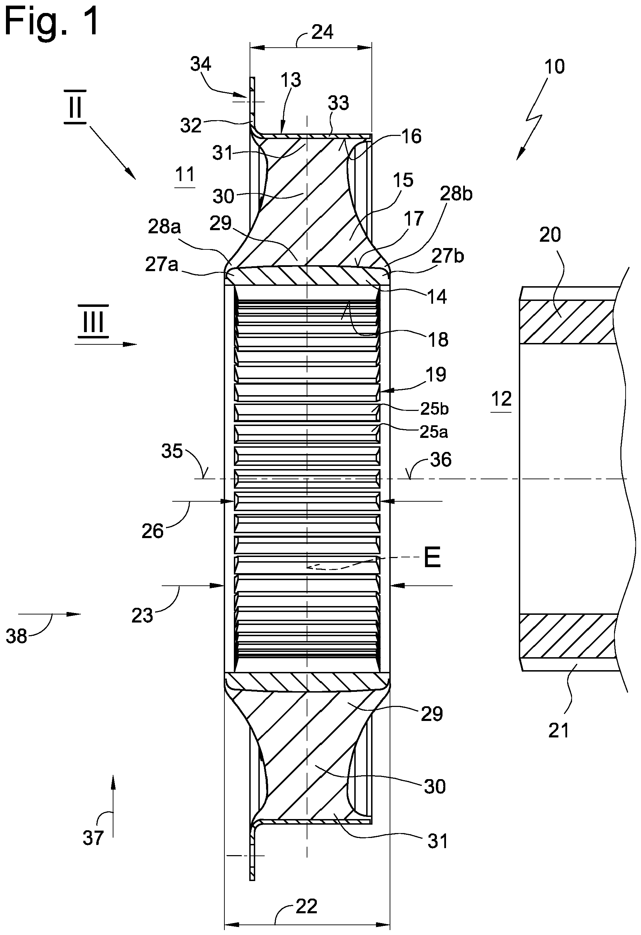

Ein erstes Ausführungsbeispiel einer in seiner Gesamtheit in den Zeichnungen mit dem Bezugszeichen 10 bezeichneten Vorrichtung gemäß der Erfindung wird zunächst anhand der Fig. 1 erläutert:
Fig. 1 zeigt die Vorrichtung 10 in einer schematischen Schnittdarstellung. Diese umfasst einen Flansch 13, einen Elastomerkörper 15 und eine Nabe 14.

Die Vorrichtung 10 dient zur drehschwingungsreduzierenden Übertragung von Drehmomenten von einem Antrieb 11 zu einem Abtrieb 12. Der Antrieb 11 kann z. B. ein in der Figur nicht dargestellter Motor sein, der sich etwa im Bereich des Bezugszeichens 11 befindet. Der Flansch 13 kann über Befestigungsbohrungen 34 und nicht dargestellte Schrauben, z. B. an einem nicht dargestellten Schwungrad des Motors befestigt werden.

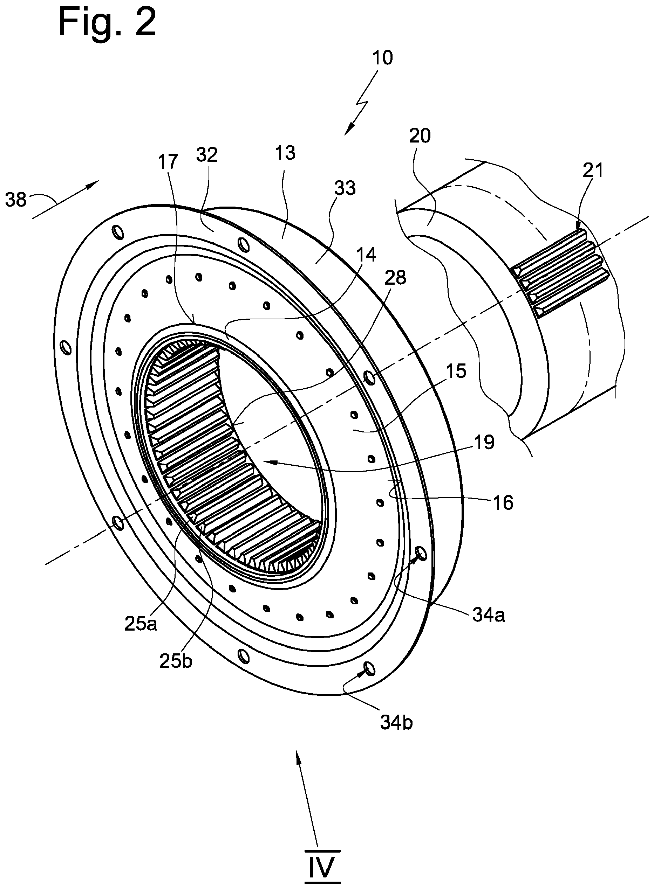

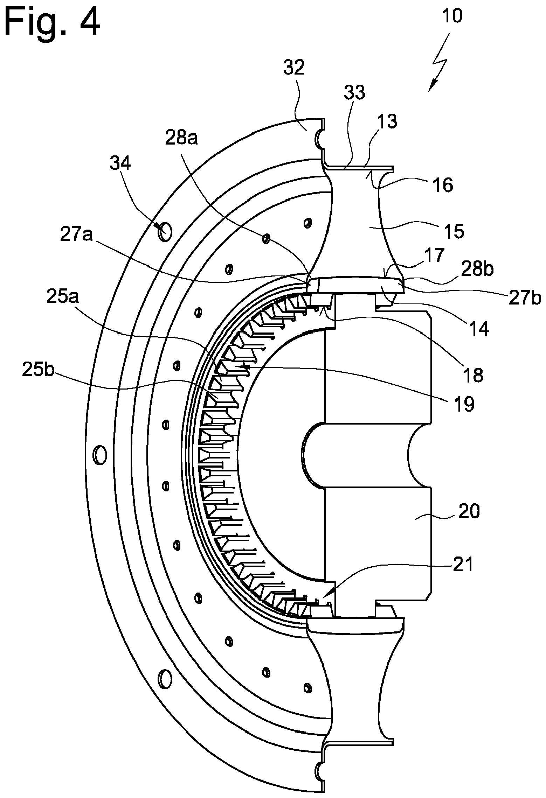

Der Abtrieb 12 kann beispielsweise von einer in den Figuren 1, 2 und 4 lediglich abgebrochen und schematisch angedeuteten Welle 20 bereitgestellt werden, die z. B. zu einem Getriebe oder einem Generator führt.

Der aus einer gummielastischen Masse bereitgestellte Elastomerkörper 15 dient zum Abbau von Lastspitzen, sowie dem Ausgleich von Drehungleichförmigkeiten, ermöglicht aber zugleich einen Axial-, Radial- und/oder Winkelversatz zwischen Antrieb und Abtrieb bzw. zwischen der antriebsseitigen Drehachse 35 und der abtriebsseitigen Drehachse 36.

In den Figuren ist die Radialrichtung durchgängig mit dem Bezugszeichen 37 und die Axialrichtung durchgängig mit dem Bezugszeichen 38 bezeichnet.

Der Flansch 13 besteht aus einem metallischen oder nicht metallischen Material und ist vorzugsweise von einem Blech, insbesondere einem Stahlblech, bereitgestellt. Beispielsweise kann es sich um ein tiefgezogenes Blech handeln, so dass der horizontale L-Schenkel 33 und der vertikale L-Schenkel 32 des Flansches 13 von einem einstückigen Bauteil in Folge eines Umform-Vorgangs gebildet sind.

Von der Erfindung ist aber auch alternativ umfasst, wenn der horizontale Schenkel 33 und der vertikale Schenkel 32 von zwei gesonderten Bauteilen bereitgestellt sind, die miteinander verschweißt oder auf andere Weise aneinander gefügt sind. Ferner umfasst die Erfindung formgebende Verfahren, wie Gießen, Spritzen oder Laminieren zur Erzeugung eines blechartigen Flansches.

Der Flansch 13 weist eine Innenumfangsfläche 16 auf, die als Anvulkanisationsfläche für den Elastomerkörper 15 fungiert.

Der Elastomerkörper 15 weist einen Radialinnenbereich 29, einen Radialmittenbereich 30 und einen Radialaußenbereich 31 auf. Wie sich anhand der Querschnittsdarstellung der Fig. 1 ergibt, verjüngt sich der Querschnitt des Elastomerkörpers 15 ausgehend von Radialinnenbereich 29 zunächst bis hin zum Radialmittenbereich 30 und erweitert sich sodann wieder zum Radialaußenbereich 31.

Der Elastomerkörper 15 ist nicht nur an die Innenumfangsfläche 16 des Flansches 13 anvulkanisiert, sondern zugleich auch an eine Außenumfangsfläche 17 der Nabe 14. Die Nabe 14 ist ein ringförmiger Körper, der auf seiner Innenumfangsfläche 18 eine Innenverzahnung 19 aufweist.

Die Nabe 14 kann ein einstückiges Kunststoffteil sein, welches z. B. aus Polyamid besteht. Von der Erfindung ist gleichermaßen auch umfasst, wenn die Nabe 14 aus einem anderen geeigneten, ausreichend hochfestem Kunststoff besteht. Die Nabe 14 kann als Kunststoffspritzgießteil 14 ausgebildet sein, so dass Fertigungstoleranzen präzise eingehalten werden können. Von der Erfindung ist auch umfasst, wenn die Nabe 14 aus Metall besteht, und z. B. als Gussteil oder als Dreh-Frästeil ausgebildet ist.

Die Innenverzahnung 19 der Nabe 14 dient dazu, mit einer Außenverzahnung 21 der Welle 20 zu kooperieren. Die Welle 20 kann mit ihrem freien Ende in die Nabe 14 axial eingesetzt werden.

Bemerkenswert ist, dass sich die Zähne 25a, 25b der Verzahnung 19 entlang der Axialrichtung 38 derartig weit erstrecken, dass die axiale Erstreckung 26 der Zähne 25a, 25b nahezu der axialen Erstreckung 23 der Nabe 14 entspricht.

Die axiale Erstreckung 23 der Nabe 14 bestimmt bei der erfindungsgemäßen Vorrichtung im Wesentlichen die axiale Bauhöhe 22 der Vorrichtung 10 insgesamt. Bei dem Ausführungsbeispiel der Fig. 1 ist deutlich, dass die axiale Erstreckung 24 des Flansches 13 geringer ist, als die axiale Erstreckung 23 der Nabe.

Durch die in Axialrichtung langgestreckte Ausbildung der Zähne 25a, 25b kann über einen besonders großen Versatz-Ausgleichsbereich ein Versatz zwischen Antrieb 11 und Antrieb 12 in Axialrichtung 38 erreicht werden. Die Welle 20 kann also unterschiedlich weit in die Nabe 14 hinein eingesetzt werden, ohne dass der Drehschluss zwischen der Innenverzahnung 19 der Nabe 14 und der Außenverzahnung 21 der Welle 20 beeinträchtigt ist.

Angemerkt sei, dass die Wahl der Zahl der Zähne 25a, 25b der Innenverzahnung 19 der Nabe 14 im Belieben des Fachmanns steht. Gleichermaßen ist deutlich, dass die Zahl der Zähne der Außenverzahnung 21 der Welle 20 der Zahl der Zähne 25a, 25b der Innenverzahnung 19 entspricht oder jedenfalls vorteilhafterweise entspricht.

Schließlich ist deutlich, dass die Zahl der Befestigungsbohrungen 34 an dem Flansch 13 zur Festlegung der Vorrichtung 10 an dem Antrieb 11 im Belieben des Fachmanns steht.

Die Innenumfangsfläche 16 des Flansches 13 ist von einer Kreiszylinderfläche gebildet.

Die Außenumfangsfläche 17 der Nabe 14 ist bei dem Ausführungsbeispiel der Figur 1 von einer Fläche gebildet, die an eine Kreiszylinderfläche, genau genommen an eine Mantelfläche eines kreiszylindrischen Körpers, angenähert ist. Der Querschnitt der Figur 1 zeigt aber, dass die Außenumfangsfläche 17 geringfügig konvex gewölbt sein kann.

Darüber hinaus lässt Fig. 1 erkennen, dass die axialen Randbereiche 27a, 27b der Außenumfangsfläche 17 der Nabe 14 radial nach innen zurückspringen. Diese Radialbereiche 27a, 27b der Außenumfangsfläche 17 sind stark gekrümmt und werden, wie sich insbesondere auch aus Figur 1 ergibt, von Werkstoffbereichen 28a, 28b des Elastomerkörpers 15 übergriffen. Die Nabe 14 wird also axial endseitig von dem Elastomerkörper 15 teilweise eingefasst.

Dies ermöglicht eine besonders langlebige Ausgestaltung der Vorrichtung 10.

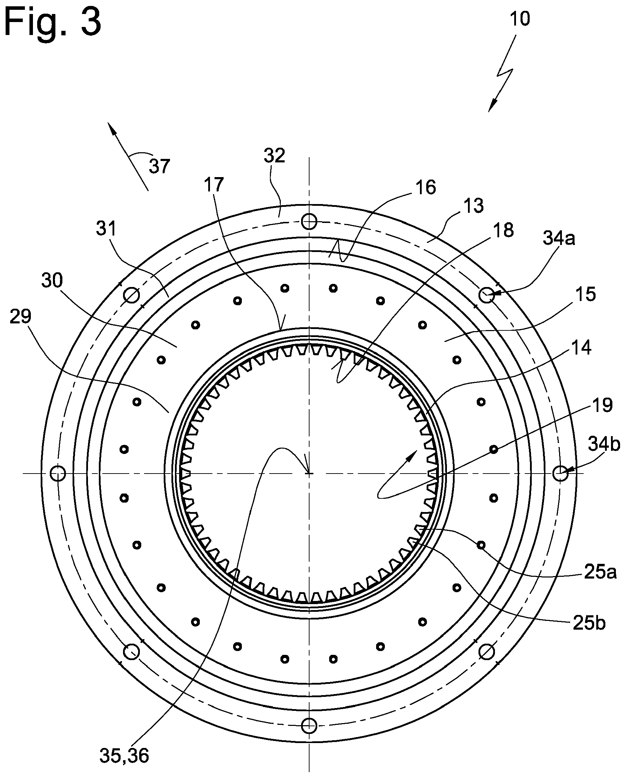

Angemerkt sei, dass sich z. B. aus Fig. 3 ergibt, dass die Zähne 25a, 25b der Innenverzahnung 19 der Nabe 14 einen trapezförmigen Querschnitt aufweisen. Von der Erfindung sind gleichermaßen auch Naben 14 mit Verzahnungen 19 mit Zähnen 25a, 25b mit einem geänderten Querschnitt erfasst.

Die erfindungsgemäße Vorrichtung stellt entlang einer Radialebene, die in Fig. 1 mit dem Bezugszeichen E bezeichnet ist, eine mechanische Schnittstelle in Form einer hochfesten Axialverzahnung bereit. Diese kann mit unterschiedlichen, in den Figuren nicht dargestellten Anschlusselementen, die mit der Nabe 14 kooperieren können, verbunden werden.

## Patentansprüche

1. Vorrichtung (10) zur Übertragung von Drehmomenten von einem Antrieb (11) zu einem Abtrieb (12), umfassend einen radial außen angeordneten, ringförmigen Flansch (13), eine radial innenliegende ringförmige Nabe (14) und einen radial zwischen Nabe (14) und Flansch (13) angeordneten ringförmigen Elastomerkörper (15), wobei der Elastomerkörper (15) an eine Innenumfangsfläche (16) des Flansches (13) anvulkanisiert ist und an eine Außenumfangsfläche (18) der Nabe (14) anvulkanisiert ist, und wobei die Nabe (14) auf ihrer Innenumfangsfläche (18) eine Innenverzahnung (19) bereitstellt.

2. Vorrichtung nach Anspruch 1, **dadurch gekennzeichnet, dass** die Innenumfangsfläche (16) des Flansches (13) kreiszylindrisch ausgebildet ist.

3. Vorrichtung nach Anspruch 1 oder 2, **dadurch gekennzeichnet, dass** die Außenumfangsfläche (17) der Nabe (14) kreiszylindrisch ausgebildet ist oder, bei Betrachtung eines Längsschnittes durch die Nabe (14), eine geringfügige konvexe Krümmung aufweist.

4. Vorrichtung nach einem der vorhergehenden Ansprüche, **dadurch gekennzeichnet, dass** die Vorrichtung (10) scheibenförmig ausgebildet ist.

5. Vorrichtung nach einem der vorhergehenden Ansprüche, **dadurch gekennzeichnet, dass** die axiale Bauhöhe (22) der Vorrichtung (10) der axialen Erstreckung (23) der Nabe (14) entspricht.

6. Vorrichtung nach einem der vorhergehenden Ansprüche, **dadurch gekennzeichnet, dass** der Flansch (13) eine geringere axiale Erstreckung (24) aufweist, als die Nabe (14).

7. Vorrichtung nach einem der vorhergehenden Ansprüche, **dadurch gekennzeichnet, dass** die Zähne (25a, 25b) der Innenverzahnung (19) eine axiale Erstreckung (26) aufweisen, die die axiale Erstreckung (23) der Nabe (14) erreicht oder nahezu erreicht.

8. Vorrichtung nach einem der vorhergehenden Ansprüche, **dadurch gekennzeichnet, dass** die Außenumfangsfläche (17) der Nabe (14) an ihren axialen Randbereichen (27a, 27b) radial nach innen zurückspringt.

9. Vorrichtung nach Anspruch 8, **dadurch gekennzeichnet, dass** der Elastomerkörper (15) die Randbereiche (27a, 27b) übergreift.

10. Vorrichtung (10) nach einem der vorhergehenden Ansprüche, **dadurch gekennzeichnet, dass** der Elastomerkörper (15) einen Radialinnenbereich (29), einen Radialmittenbereich (30 und einen Radialaußenbereich (31) umfasst, wobei sich der Querschnitt des Elastomerkörpers von dem Radialinnenbereich (29) hin zu dem Radialmittenbereich (30) verjüngt und wobei sich der Querschnitt des Elastomerkörpers (15) von dem Radialmittenbereich (30) hin zu dem Radialaußenbereich (31) erweitert.

11. Vorrichtung nach einem der vorhergehenden Ansprüche, **dadurch gekennzeichnet, dass** die Nabe (14) aus Kunststoff, insbesondere aus Polyamid, weiter insbesondere aus glasfaserverstärktem Polyamid, oder aus Polycaprolactam (Polyamid 6), besteht.

12. Vorrichtung nach einem der Ansprüche 1 bis 10, **dadurch gekennzeichnet, dass** die Nabe (14) aus Metall besteht.

13. Vorrichtung nach einem der vorhergehenden Ansprüche, **dadurch gekennzeichnet, dass** in die Nabe (14) eine Welle (20) mit einer Außenverzahnung (21) einsteckbar ist, die mit der Innenverzahnung (19) kooperiert.

14. Vorrichtung nach einem der vorhergehenden Ansprüche, **dadurch gekennzeichnet, dass** der Flansch (13) aus Metall, insbesondere aus einem Metallblech, weiter insbesondere aus einem Stahlblech, oder aus Kunstoff, besteht.

15. Verfahren zur Herstellung einer Vorrichtung (10), insbesondere einer Vorrichtung (10) nach einem der Ansprüche 1 bis 14, zur Übertragung von Drehmomenten von einem Antrieb (11) zu einem Abtrieb (12), umfassend die folgenden Schritte:
a) Bereitstellen eines ringförmigen Flansches (13),
b) Bereitstellen einer ringförmigen, aus Kunststoff bestehenden, mit einer Innenverzahnung versehenen Nabe (14),
c) Einlegen von Flansch (13) und Nabe (14) in eine Form,
d) Einbringen einer flüssigen, aushärtbaren gummielastischen Masse in die Form,
e) Aushärtenlassen oder Vulkanisieren der Masse zu einem Elastomerkörper (15) unter gleichzeitigem Anvulkanisieren des Elastomerkörpers (15) an eine Innenumfangsfläche (16) des Flansches (13) und an eine Außenumfangsfläche (17) der Nabe (14),
f) Entnehmen der so gebildeten Vorrichtung (10) aus der Form.
